(19) **Europäisches Patentamt**

**European Patent Office**

**Office européen des brevets**

(11) **EP 1 192 340 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(21) Anmeldenummer: **00947830.6**

(22) Anmeldetag: **27.06.2000**

(51) Int Cl.⁷: **F01N 11/00**, F01N 3/30

(86) Internationale Anmeldenummer:
**PCT/DE00/02085**

(87) Internationale Veröffentlichungsnummer:
**WO 01/004471 (18.01.2001 Gazette 2001/03)**

(54) **VERFAHREN ZUM ÜBERPRÜFEN EINES DREIWEGE-ABGASKATALYSATORS EINER BRENNKRAFTMASCHINE**

METHOD FOR VERIFYING A CATALYTIC EXHAUST BOX OF AN INTERNAL COMBUSTION ENGINE

PROCEDE POUR LA VERIFICATION D'UN POT D'ECHAPPEMENT CATALYTIQUE A TROIS VOIES D'UN MOTEUR A COMBUSTION INTERNE

(84) Benannte Vertragsstaaten:
**DE FR GB**

(30) Priorität: **07.07.1999 DE 19931321**

(43) Veröffentlichungstag der Anmeldung:
**03.04.2002 Patentblatt 2002/14**

(73) Patentinhaber: **SIEMENS AKTIENGESELLSCHAFT**
**80333 München (DE)**

(72) Erfinder:
• **BEER, Johannes**
  **D-93047 Regensburg (DE)**
• **ZHANG, Hong**
  **D-93105 Tegernheim (DE)**

(56) Entgegenhaltungen:
**EP-A- 0 814 249       US-A- 5 426 934**

• **PATENT ABSTRACTS OF JAPAN vol. 1997, no. 10, 31. Oktober 1997 (1997-10-31) & JP 09 144531 A (RIKEN CORP), 3. Juni 1997 (1997-06-03)**
• **PATENT ABSTRACTS OF JAPAN vol. 1995, no. 10, 30. November 1995 (1995-11-30) & JP 07 180535 A (FUJI HEAVY IND LTD), 18. Juli 1995 (1995-07-18)**
• **M SIDERIS: "Methods for monitoring and diagnosing the efficiency of catalytic converters" , EPO APPLIED TECHNOLOGY SERIES. VOL. 14. STUDIES IN SURFACE SCIENCE AND CATALYSIS. VOL. 115,NL,AMSTERDAM, ELSEVIER, PAGE(S) 335-349 XP002132451 ISBN: 0-444-82952-0 Seite 338, letzter Absatz -Seite 339, Absatz 1 Seite 344, Absatz 1 - letzter Absatz**

**Beschreibung**

Die Erfindung betrifft ein Verfahren zum Überprüfen eines Dreiwege-Abgaskatalysators einer Brennkraftmaschine gemäß dem Oberbegriff des Anspruches 1.

Zur Überwachung von Abgaskatalysatoren für Brennkraftmaschinen sind Verfahren bekannt, welche die Sauerstoffspeicherfähigkeit (Oxygen Storage Capacity, OSC-Verfahren) des Katalysators ausnutzen. Diese Speicherfähigkeit korreliert mit der Kohlenwasserstoff-Konvertierung im Katalysator. Wenn der Katalysator gute Konvertierungsfähigkeiten besitzt, werden die Lambdaschwankungen vor dem Katalysator, welche durch den Lambdaregler erzeugt und von einer ersten Lambdasonde erfasst werden, durch die Sauerstoffspeicherfähigkeit des Katalysators geglättet. Hat der Katalysator infolge Alterung, Vergiftung durch verbleiten Kraftstoff oder durch Verbrennungsaussetzer keine oder nur verminderte Konvertierungseigenschaften, so schlägt die stromauf des Katalysators vorhandene Regelschwingung auf die Lambdasonde stromab des Katalysators durch. Durch Vergleich der Signalamplituden der beiden Lambdasonden kann auf einen funktionsfähigen oder defekten Katalysator geschlossen werden (z.B. DE 23 28 459 A1).

Bei Fahrzeugen, die nach den strengen ULEV (Ultra Low Emission Vehicle) oder SULEV (Super Ultra Low Emission Vehicle)-Grenzwerten zertifiziert sind, führen schon Verschlechterungen der Konvertierungsrate von wenigen Prozent zu einer Überschreitung der Diagnosegrenzwerte. Bei diesen Konvertierungsraten werden jedoch relativ niedrige Amplitudenverhältnisse ermittelt. Damit ist eine sichere Unterscheidung zwischen einem defekten und einem funktionsfähigen Katalysator, insbesondere unter Berücksichtigung der Serienstreuung und der nicht linearen Korrelation zwischen Sauerstoffspeicherfähigkeit und HC-Konvertierung nicht mehr gegeben.

Aus der DE 197 14 293 C1 wird der Zusammenhang zwischen exothermer Energieumsetzung im Katalysator und HC-Konvertierung mittels Temperaturverfahren zur Diagnose des Katalysators genutzt. Zur Beurteilung der Konvertierungsfähigkeit des Katalysators wird dabei nach einem Temperaturmodell die in einem nicht katalytisch beschichteten Referenzkatalysator erzeugte Wärmeenergie berechnet und mit der in dem Katalysator erzeugten Wärmeenergie verglichen, die gemessen wird. Aus der Differenz wird ein Maß für die Konvertierungsfähigkeit des Katalysators ermittelt und durch Vergleich mit einem Vergleichswert entweder auf einen defekten Katalysator oder auf einen Katalysator mit ausreichender Konvertierungsfähigkeit geschlossen.

Dokument JP9144531A offenbart ein Verfahren zum Überprüfen der Konvertierungsfähigkeit eines Dreiwege-Abgaskatalysators einer Brennkraftmaschine während eines stationären Betriebzustands, wobei die NOx-Konzentration im Abgaskanal stromabwärts des Katalysators mittels eines NOx-Sensors erfaßt wird und aus einer Regressionsanalyse der gemessenen Werten der NOx-Konzentration während eines Zeitintervalls auf die Konvertierungseigenschaften des Katalysators geschlossen wird.

Die Aufgabe der Erfindung besteht darin, während des Warmlaufs der Brennkraftmaschine ein genaues Verfahren zum Überprüfen der Konvertierungsfähigkeit eines Dreiwege-Abgaskatalysators anzugeben, das ohne teuere Temperatursensoren und ohne eine zweite Lambdasonde auskommt.

Diese Aufgabe wird durch die Merkmale der Patentansprüche 1 oder 2 gelöst.

Vorliegender Erfindung liegt die Idee zugrunde, zur Überprüfung eines Dreiwege-Katalysators einen NOx-Sensor zur Bestimmung der NOx-Konzentration stromabwärts des zu diagnostizierenden Katalysators einzusetzen. Vorraussetzung für das Diagnoseverfahren ist ein Luftverhältnis $\lambda$, das sich im Konvertierungsfenster des Katalysators (typischerweise: $0.995 \leq \lambda \leq 0.999$) befindet, da insbesondere für Lambdawerte größer 0.999 die NOx-Konvertierung gravierend absinkt.

Aus der gemessenen NOx-Konzentration kann aufgrund des engen Zusammenhanges von NOx- u. HC-Umsetzung neben der direkt ermittelten NOx-Konvertierungseigenschaften auch auf die HC-Konvertierungseigenschaften eines Dreiwege-Katalysators geschlossen werden. Dieser Zusammenhang gilt für den oben beschriebenen Bereich des Luftverhältnisses.

Das Verfahren hat insbesondere den Vorteil, daß es auch die Diagnose von Abgasanlagen mit Dreiwege-Katalysatoren mit hoher Genauigkeit erlaubt, selbst wenn strenge Abgasgrenzwerte einzuhalten sind.

Weitere vorteilhafte Ausgestaltungen der Erfindung werden nachfolgend unter Bezugnahme auf die Zeichnung näher erläutert. Es zeigen:

Figur 1    ein Blockschaltbild einer Brennkraftmaschine mit zugehöriger Abgasnachbehandlungsanlage,

Figur 2    ein Diagramm für den zeitlichen Verlauf der NOx-Konzentration stromabwärts des Abgaskatalysators bei Warmlauf der Brennkraftmaschine und

Figur 3    ein Diagramm für den zeitlichen Verlauf der NOx-Konzentration stromabwärts des Abgaskatalysators bei Zufuhr von Sekundärluft während des Warmlaufs der Brennkraftmaschine.

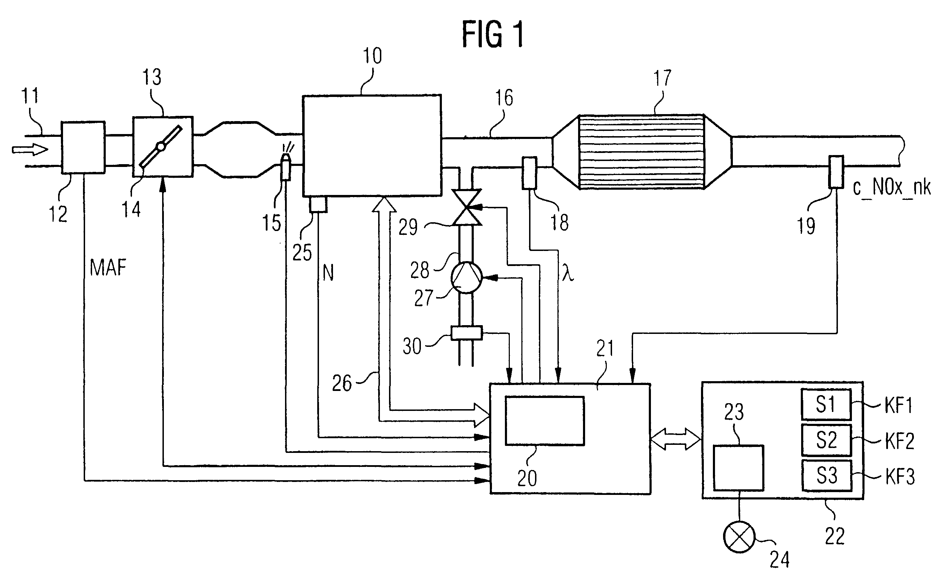

In Figur 1 ist in Form eines Blockschaltbildes sehr vereinfacht eine Brennkraftmaschine mit einer ihr zugeordneten Abgasnachbehandlungsanlage gezeigt, bei der das erfindungsgemäße Verfahren angewendet wird. Dabei sind nur diejenigen Komponenten dargestellt, die für das Verständnis der Erfindung notwendig sind. Insbesondere ist auf die Darstellung des Kraftstoffkreislaufes verzichtet worden.

Der Brennkraftmaschine 10 wird über einen Ansaugkanal 11 die zur Verbrennung notwendige Luft zugeführt. Im Ansaugkanal 11 sind in Strömungsrichtung der angesaugten Luft gesehen nacheinander ein Lastsensor in Form eines Luftmassenmessers 12, ein Drosselklappenblock 13 mit einer Drosselklappe 14 und entsprechend der Zylinderzahl ein Satz Einspritzventile 15 vorgesehen, von denen nur eines gezeigt ist. Das erfindungsgemäße Verfahren ist aber auch bei einem System anwendbar, das nur ein Einspritzventil für alle Zylinder aufweist (Zentraleinspritzsystem, Single Point Injection System) oder bei dem Kraftstoff direkt in die jeweiligen Zylinder eingespritzt wird (Direkteinspritzung, Hochdruckeinspritzung).

Ausgangsseitig ist die Brennkraftmaschine 10 mit einem Abgaskanal 16 verbunden, in dem ein Dreiwege-Abgaskatalysator 17 angeordnet ist. Im folgenden wird dafür der vereinfachte begriff Abgaskatalysator verwendet.

Die Sensorik für die Abgasnachbehandlung beinhaltet u.a. einen stromaufwärts des Abgaskatalysators 17 angeordneten Sauerstoffmeßaufnehmer in Form einer Lambdasonde 18 und einen NOx-Sensor 19 zur Bestimmung der NOx-Konzentration und zur Lieferung eines entsprechendes Signals zur Trimmregelung stromabwärts des Abgaskatalysators 17. Als Sauerstoffmeßaufnehmer 18 kann entweder eine Breitband-Lambdasonde eingesetzt werden, welche in Abhängigkeit des Sauerstoffgehaltes im Abgas ein stetiges, z.B. lineares Ausgangssignal abgibt oder eine Lambda-Sprungsonde verwendet werden, dessen Ausgangssignal sich bei Übergang von fettem nach megerem Gemisch und umgekehrt sprunghaft ändert. Mit dem Signal dieses Meßaufnehmers 18 wird das Gemisch entsprechend der Sollwertvorgaben geregelt. Diese Funktion übernimmt eine an sich bekannte Lambdaregelungseinrichtung 20, die vorzugsweise in eine den Betrieb der Brennkraftmaschine steuernde bzw. regelnde Steuerungseinrichtung 21 integriert ist. Solche elektronischen Steuerungseinrichtungen 21, die in der Regel einen oder mehrere Mikroprozessoren beinhalten und die neben der Kraftstoffeinspritzung und der Zündungsregelung noch eine Vielzahl weiterer Steuer-und Regelaufgaben, u.a. auch die Überprüfung de sAbgasnachbehandlungssystems übernehmen, sind an sich bekannt, so daß im folgenden nur auf den im Zusammmenhang mit der Erfindung relevanten Aufbau und dessen Funktionsweise eingagangen wird. Insbesondere ist die Steuerungseinrichtung 21 mit einer Speichereinrichtung 22 verbunden, in der u.a. verschiedene Kennfelder KF1-KF3 gespeichert sind, deren jeweilige bedeutung anhand der Beschreibumng der nachfolgenden Figuren noch näher erläutert wird.

Die Speichereinrichtung umfasst ferner einen Fehlerspeicher 23, dem eine Fehleranzeigevorrichtung 24 zugeordnet ist. Diese Fehleranzeigevorrrichtung 24 ist vorzugsweise als Fehlerlampe (MIL, malfunction indication lamp) realisiert.

Die Drehzahl N der Brennkraftmaschine wird mit Hilfe eines Drehzahlsensors 25 erfasst. Dieses Drehzahlsignal wird ebenso der Steuerungseinrichtung 21 zur weiteren Aus-und Verarbeitung zugeführt, wie das Ausgangssignalen MAF des Luftmassenmessers 12 und das Signal c_NOx_nk des NOx-Sensors 19

Zur Steuerung und Regelung der Brennkraftmaschine 10 ist die Steuerungseinrichtung 21 über eine Daten-und Steuerleitung 26 noch mit weiteren, nicht explizit dargestellten Sensoren und Aktoren verbunden. Zum Zuführen von Sekundärluft in den Abgaskanal 16 stromaufwärts des Abgaskatalysators 17 ist ein an sich bekanntes Sekundärluftsystem vorgesehen, das eine Sekundärluftpumpe 27, eine Sekundärluftzuleitung 28, ein Sekundärluftventil 29 und einen Sekundärluftmassenmesser 30 aufweist. Die Sekundärluftpumpe 27 und das Sekundärluftventil 29 sind über Ansteuerleitungen mit der Steuerungseinrichtung 21 verbunden. Der Sekundärluftmassenmesser 30 gibt ein der von der Sekundärluftpumpe 27 geförderten Luftmasse entsprechendes Signal an die Steuerungseinrichtung 21 ab.

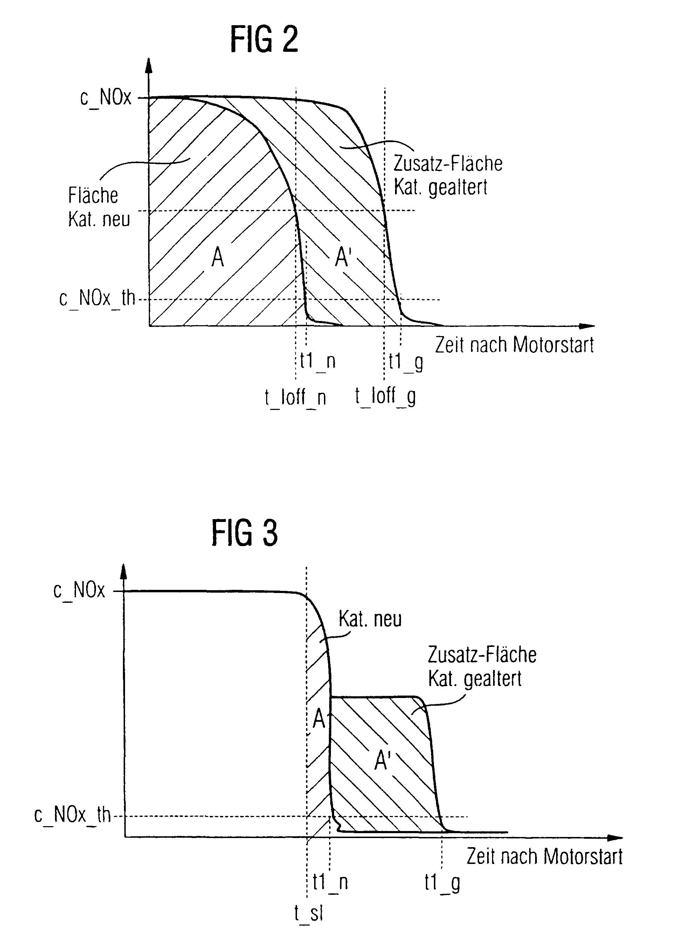

Die Figur 2 zeigt den Zusammenhang zwischen der NOx-Konzentration stromabwärts des Abgaskatalysators und der Zeit t während des Warmlaufs der Brennkraftmaschine mit einem Luftverhältnis innerhalb oder geringfügig unterhalb des angegebenen Konvertierungsfensters für einen neuen und einen gealterten Abgaskatalysator. Auf der Abszisse ist dabei die Zeit t nach dem Start der Brennkraftmaschine, auf der Ordinate die Konzentration c_NOx aufgetragen, die mittels des NOx-Sensors 19 (Figur 1) erfasst wird.

Erreicht der Abgaskatalysator die Light-Off Temperatur, die als Temperatur definiert ist, bei der 50% der NOx-Emission konvertiert werden, typischerweise 250°C-300°C bei üblichen Abgaskatalysatoren, so nimmt die gemessene NOx-Konzentration stromabwärts des Abgaskatalysators deutlich ab. Abhängig von der Alterung des Abgaskatalysators ergibt sich für einen gealterten Abgaskatalysator eine zeitlich verzögertes Einsetzen der NOx-Konvertierung. Dieser Effekt wird zur Diagnose genützt. Auf der Abszisse ist die Anspringzeit (Light-Off Zeit) für einen neuen Abgaskatalysator mit t_loff_n, die Anspringzeit (Light-Off Zeit) für einen gealterten Abgaskatalysator mit t_loff_g eingezeichnet.

Die schraffierte Fläche der NOx-Konzentration stromabwärts des Abgaskatalysator ist durch den Zeitpunkt t1, bei dem eine vorbestimmte NOx-Konzentrationsschwelle c_NOx_th unterschritten wird, begrenzt. Diese Fläche ist ein Maß für die NOx-Konvertierungseigenschaft des Abgaskatalysators.

Gemäß der Darstellung nach Figur 2 wird der Integrationswert für einen gealterten Abgaskatalysator aufgrund des verzögerten Anspringens um die Zusatzfläche A'größer sein als für einen neuwertigen Abgaskatalysator (Fläche A). Der Schwellenwert c_NOx_th wird erst zum Zeitpunkt t1_g unterschritten, während er bei einem neuen oder neuwertigen Abgaskatalysator schon zum Zeitpunkt t1_n unterschritten wird.

Für einen neuen Abgaskatalysator gilt:

$$S_1(\lambda, N, MAF) > \int_0^{t_1} c_{NOx}(t)\,dt \qquad (1)$$

$$\text{wobei } t_1 = \min\{t / c_{NOx}(t) < c_{NOx\_th}\}$$

Das Überschreiten des Schwellenwertes S1, welcher über ein empirisch ermitteltes und/oder durch Fahrversuche aufgenommenes Kennfeld KF1 abhängig von den Betriebsgrößen Luftverhältnis $\lambda$, Drehzahl N und angesaugtem Luftmassenstrom MAF ausgelesen wird, führt zur Aktivierung der Fehleranzeigevorrichtung 24. Parallel hierzu kann das Überschreiten des Schwellenwertes S1 in einen Fehlerspeicher 23 eingetragen werden, der beim nächsten Werkstattaufenthalt des Fahrzeuges ausgelesen werden kann.

In Figur 3 ist der Zusammenhang zwischen der NOx-Konzentration stromabwärts des Abgaskatalysators und der Zeit bei Zufuhr von Sekundärluft während des Warmlaufs der Brennkraftmaschine für einen neuen und einen gealterten Abgaskatalysator gezeigt.

Um das Anspringen des Abgaskatalysators zu beschleunigen, wird in fettes Verbrennungsabgas Sekundärluft eingeblasen, was eine beschleunigte Oxidation der Abgasbestandteile bewirkt. Dieses Vorgehen führt zu einer mageren Abgaszusammensetzung.

Ist das Sekundärluftsystem aktiviert, d.h. die Sekundärluftpumpe 27 eingeschaltet und das Sekundärluftventil 29 (Figur 1) geöffnet, so kann aufgrund der fehlenden NOx-Konvertierung des Abgaskatalysators im mageren Abgas keine Diagnose durchgeführt werden.

Wird die Zeitdauer t_sL, innerhalb derer das Sekundärluftsystem aktiviert ist, so bemessen, daß sie mit der Light-Off Zeit t_loff_n eines neuen Abgaskatalysators identisch ist, so kann aus dem Rückgang der NOx-Konzentration die Konvertierung abgeleitet werden. Nach dem Ablauf der Zeitdauer t_sl stellt die Lambdaregelung eine Abgaszusammensetzung ein, die im Katalysator-Konvertierungsfenster liegt und folgedessen bei der gute Bedingungen zur NOx-Konvertierung herrschen.

Die schraffierte Fläche der NOx-Konzentration stromabwärts des Abgaskatalysators, ist durch den Zeitpunkt t1, bei dem eine vorbestimmte NOx-Konzentrationsschwelle c_NOx_th unterschritten wird, begrenzt. Diese Fläche ist ein Maß für die NOx-Konvertierungseigenschaft des Abgaskatalysators. Die NOx-Konzentration ändert sich mit Abschalten des Sekundärluftsystems auch bei einem gealterten Abgaskatalysator, da sich nach Beenden der Aufheizmaßnahme mittels Sekundärlufteinblasung in den Abgaskanal auch das motorische Verbrennungslambda ändert.

Gemäß der Darstellung nach Figur 3 wird der Integrationswert für einen gealterten Abgaskatalysator, aufgrund des verzögerten Anspringens um die Zusatzfläche A größer sein als für einen neuen oder neuwertigen Abgaskatalysator (Fläche A). Der Schwellenwert c_NOx_th wird erst zum Zeitpunkt t1_g unterschritten, während er bei einem neuen oder neuwertigen Abgaskatalysator schon zum Zeitpunkt t1_n unterschritten wird.

Für einen neuen Abgaskatalysator gilt:

$$S_2(\lambda, N, MAF) > \int_{t_{sL}}^{t_1} c_{NOx}(t)\,dt \qquad (2)$$

$$\text{wobei } t_1 = \min\{t / c_{NOx}(t) < c_{NOx\_th}\}$$

Das Überschreiten des Schwellenwertes S2, welcher über ein empirisch ermitteltes und/oder durch Fahrversuche aufgenommenes Kennfeld KF2 abhängig von den Betriebsgrößen Luftverhältnis $\lambda$, Drehzahl N und angesaugtem Luftmassenstrom MAF ausgelesen wird, führt zur Aktivierung der Fehleranzeigevorrichtung 24. Parallel hierzu kann das Überschreiten des Schwellenwertes S1 in einen Fehlerspeicher 23 eingetragen werden, der beim nächsten Werkstattaufenthalt des Fahrzeuges ausgelesen werden kann.

Neben den bereits beschriebenen Möglichkeiten, die Konvertierungsfähigkeit des Abgaskatalysators während des Warmlaufes der Brennkraftmaschine zu diagnostizieren, ist es auch möglich die Diagnose des Abgaskatalysators bei betriebswarmer Brennkraftmaschine durchzuführen.

Ist die Lambdaregelung aktiv (0.995 ≤λ≤ 0.999) so kann auch in stationären Betriebszuständen der Brennkraftmaschine eine Diagnose ausgeführt werden. Zur Erhöhung der Diagnosesicherheit wird die gemessene NOx-Konzentration über einen vorbestimmen Zeitraum t_Stat aufintegriert und mit einem Schwellenwert S3, welcher wiederum über ein Kennfeld KF3 von Betriebsgrößen abhängt, verglichen.

$$S_3(\lambda, N, MAF) > \int_{t_{Start}}^{t_{Start}+t_{Stat}} c_{NOx}(t)dt \qquad (3)$$

Der Integrationswert für einen gealterten Katalysator, ist aufgrund der verminderten Konvertierung größer als für einen neuwertigen Abgaskatalysator. Das Überschreiten des Schwellenwertes S3, welcher über ein empirisch ermitteltes und/oder durch Fahrversuche aufgenommenes Kennfeld KF3 abhängig von den Betriebsgrößen Luftverhältnis λ, Drehzahl N und angesaugtem Luftmassenstrom MAF ausgelesen wird, führt zur Aktivierung der Fehleranzeigevorrichtung 24. Parallel hierzu kann das Überschreiten des Schwellenwertes S1 in einen Fehlerspeicher 23 eingetragen werden, der beim nächsten Werkstattaufenthalt des Fahrzeuges ausgelesen werden kann.

## Patentansprüche

1. Verfahren zum Überprüfen der Konvertierungsfähigkeit eines in einem Abgaskanal (16) einer Brennkraftmaschine (10) angeordneten Dreiwege-Abgaskatalysators (17), wobei die Brennkraftmaschine mit einem Luftverhältnis (λ) betrieben wird, das dem Konvertierungsfenster des Dreiwege-Abgaskatalysators (17) entspricht, die NOx-Konzentration im Abgaskanal (16) stromabwärts des Dreiwege-Abgaskatalysators (17) mittels eines NOx-Sensors (19) erfasst wird und aus den Werten der NOx-Konzentration (c_NOx) auf die Konvertierungseigenschaften des Dreiwege-Abgaskatalysators geschlossen wird,
   **dadurch gekennzeichnet, daß**
   während des Warmlaufs der Brennkraftmaschine (10) mit einem Luftverhältnis (λ), das größer oder gleich 1 ist

   - ein Summenwert (A,A') gebildet wird aus der gemessenen NOx-Konzentration (c_NOx) ab Beginn des Starts der Brennkraftmaschine (10) bis zum Zeitpunkt (t1), bei dem die NOx-Konzentration (c_NOx) einen vorgegebenen Schwellenwert (c_NOx_th) unterschreitet,
   - der Summenwert (A,A') mit einem vorgegebenen Schwellenwert (S1) verglichen wird und
   - bei Überschreiten des Schwellenwertes (S1) auf einen gealterten Abgaskatalysator (17) geschlossen wird.

2. Verfahren zum Überprüfen der Konvertierungsfähigkeit eines in einem Abgaskanal (16) einer Brennkraftmaschine (10) angeordneten Dreiwege-Abgaskatalysators (17), wobei die Brennkraftmaschine mit einem Luftverhältnis (λ) betrieben wird, das dem Konvertierungsfenster des Dreiwege-Abgaskatalysators (17) entspricht, die NOx-Konzentration im Abgaskanal (16) stromabwärts des Dreiwege-Abgaskatalysators (17) mittels eines NOx-Sensors (19) erfasst wird und aus den Werten der NOx-Konzentration (c_NOx) auf die Konvertierungseigenschaften des Dreiwege-Abgaskatalysators geschlossen wird,
   **dadurch gekennzeichnet, daß**
   während des Warmlaufs der Brennkraftmaschine (10) und Zuführen von Sekundärluft

   - ein Summenwert (A,A') gebildet wird aus der gemessenen NOx-Konzentration (c_NOx) ab dem Zeitpunkt (t_sl) des Beenden der Sekundärluftzufuhr bis zum Zeitpunkt (t1), bei dem die NOx-Konzentration (c_NOx) einen vorgegebenen Schwellenwert (c_NOx_th) unterschreitet,
   - der Summenwert (A,A') mit einem vorgegebenen Schwellenwert (S2) verglichen wird und
   - bei Überschreiten des Schwellenwertes (S2) auf einen gealterten Abgaskatalysator (17) geschlossen wird.

3. Verfahren nach einem der Ansprüche 1-2, **dadurch gekennzeichnet, daß** bei Überschreiten des Schwellenwertes (S1;S2;S3) eine Fehleranzeigevorrichtung (24) aktiviert wird und/oder ein Eintrag in einen Fehlerspeicher (23) erfolgt.

4. Verfahren nach Anspruch 3, **dadurch gekennzeichnet, daß** der Schwellenwert (S1;S2;S3) in einem Kennfeld (KF1;KF2;KF3) abhängig von Betriebsgrößen der Brennkraftmaschine (10) abgelegt ist.

**5.** Verfahren nach Anspruch 4, **dadurch gekennzeichnet, daß** als Betriebsgrößen der von der Brennkraftmaschine (10) mindestens eine der Größen angesaugte Luftmassenstrom (MAF), das Luftverhältnis (λ) und die Drehzahl (N) der Brennkraftmaschine (10) verwendet werden.

## Claims

**1.** Method for verifying the conversion capacity of a three-way exhaust gas catalytic converter (17) located in an exhaust gas duct (16) in an internal combustion engine (10), in which the internal combustion engine is operated with an air ratio (λ) which corresponds to the conversion window of the three-way exhaust gas catalytic converter (17), the NOx concentration in the exhaust gas duct (16) downstream from the three-way exhaust gas catalytic converter (17) is detected by means of a NOx sensor (19) and the conversion characteristics of the three-way exhaust gas catalytic converter are deduced from the NOx concentration (c_NOx) values, **characterised in that** during the warm-up phase of the internal combustion engine (10) at an air ratio (λ) which is greater than or equal to 1

- a cumulative value (A,A') is formed from the measured NOx concentration (c_NOx) from the beginning of start-up of the internal combustion engine (10) until the time (t1) at which the NOx concentration (c_NOx) falls below a predefined threshold value (c_NOx_th),
- the cumulative value (A,A') is compared with a predefined threshold value (S1) and
- if the threshold value (S1) is exceeded, it is deduced that the exhaust gas catalytic converter (17) is older.

**2.** Method for verifying the conversion capacity of a three-way exhaust gas catalytic converter (17) located in an exhaust gas duct (16) in an internal combustion engine (10), in which the internal combustion engine is operated at an air ratio (λ) which corresponds to the conversion window of the three-way exhaust gas catalytic converter (17), the NOx concentration in the exhaust gas duct (16) downstream from the three-way exhaust gas catalytic converter (17) is detected by means of a NOx sensor (19) and the conversion characteristics of the three-way exhaust gas catalytic converter are deduced from the NOx concentration (c_NOx) values, **characterised in that** during the warm-up phase of the internal combustion engine (10) and while secondary air is being supplied

- a cumulative value (A,A') is formed from the measured NOx concentration (c_NOx) from the time (t_sl) of termination of the secondary air supply to the time (t1) at which the NOx concentration (c_NOx) falls below a predefined threshold value (c_NOx_th),
- the cumulative value (A,A') is compared with a predefined threshold value (S2) and
- if the threshold value (S2) is exceeded, it is deduced that the exhaust gas catalytic converter (17) is older.

**3.** Method according to one of Claims 1-2, **characterised in that** when the threshold value (S1; S2; S3) is exceeded, an error display device (24) is activated and/or data is input into an error store (23).

**4.** Method according to Claim 3, **characterised in that** the threshold value (S1; S2; S3) is filed in a set of performance characteristics (KF1; KF2; KF3) on the basis of operating variables of the internal combustion engine (10).

**5.** Method according to Claim 4, **characterised in that** as a minimum one of the variables mass air flow intake (MAF), air ratio (λ) and speed (N) of the internal combustion engine (10) is used as operating variables for the internal combustion engine (10).

## Revendications

**1.** Procédé de contrôle de la capacité de conversion d'un catalyseur de gaz d'échappement à trois voies (17) monté dans la condulte de gaz d'échappement (16) d'un moteur à combustion interne (10), dans lequel le moteur à combustion interne fonctionne avec un rapport d'air (λ) qui correspond à la fenêtre de conversion du catalyseur de gaz d'échappement à trois voies (17),
la concentration de NOx dans la conduite de gaz d'échappement (16) en aval du catalyseur de gaz d'échappement à trois voies (17) est enregistrée au moyen d'un capteur de NOx (19) et les propriétés de conversion du catalyseur de gaz d'échappement à trois voies sont déduites des valeurs de concentration de NOx (c_NOx),
**caractérisé en ce que**
au cours de l'échauffement du moteur à combustion interne (10) avec un rapport d'air (λ) qui est supérieur ou égal à 1,

- une valeur cumulée (A, A') est établie à partir de la concentration de NOx (c_NOx) mesurée entre le début du démarrage du moteur à combustion interne (10) et l'instant (t1) auquel la concentration de NOx (c_NOx) franchit vers le bas une valeur de seuil prédéfinie (c_NOx_th),
- la valeur cumulée (A, A') est comparée avec une valeur seuil prédéfinie (S1) et
- si la valeur seuil (S1) est franchie vers le haut, on conclut que le catalyseur de gaz d'échappement (17) est usagé.

2. Procédé de contrôle de la capacité de conversion d'un catalyseur de gaz d'échappement à trois voies (17) monté dans la conduite de gaz d'échappement (16) d'un moteur à combustion interne (10), dans lequel le moteur à combustion interne fonctionne avec un rapport d'air (λ) qui correspond à la fenêtre de conversion du catalyseur de gaz d'échappement à trois voies (17),

la concentration de NOx dans la conduite de gaz d'échappement (16) en aval du catalyseur de gaz d'échappement à trois voies (17) est enregistrée au moyen d'un capteur de NOx (19) et les propriétés de conversion du catalyseur de gaz d'échappement à trois voies sont déduites des valeurs de concentration de NOx (c_NOx),

**caractérisé en ce que**

au cours de l'échauffement du moteur à combustion interne (10) avec une alimentation en air secondaire,

- une valeur cumulée (A, A') est établie à partir de la concentration de NOx (c_NOx) mesurée entre l'instant (t_sl) de la fin de l'alimentation en air secondaire et l'instant (t1) auquel la concentration de NOx (c_NOx) franchit vers le bas une valeur seuil prédéfinie (c_NOx_th),
- la valeur cumulée (A, A') est comparée avec une valeur seuil prédéfinie (S2) et
- si la valeur seuil (S2) est franchie vers le haut, on conclut que le catalyseur de gaz d'échappement (17) est usagé.

3. Procédé selon l'une des revendications 1 et 2, **caractérisé en ce que**, si la valeur seuil (S1, S2, S3) est franchie vers le haut, un dispositif d'indication de défauts (24) et activé et/ou un enregistrement est effectuée dans une mémoire de défauts (23).

4. Procédé selon la revendication 3, **caractérisé en ce que** la valeur seuil (S1, S2, S3) est déposée dans une cartographie (KF1, KF2, KF3) en fonction de grandeurs de service du moteur à combustion interne (10).

5. Procédé selon la revendications 4, **caractérisé en ce qu'**en guise de grandeurs de service du moteur à combustion interne (10) sont utilisées au moins l'une des grandeurs que sont le flux massique d'air aspiré (MAF), le rapport d'air (λ) et la vitesse de rotation (N) du moteur à combustion interne (10).

# FIG 1

EP 1 192 340 B1

# FIG 2

c_NOx

Zusatz-Fläche
Kat. gealtert

Fläche
Kat. neu

A

A'

c_NOx_th

Zeit nach Motorstart

t1_n    t1_g

t_loff_n    t_loff_g

# FIG 3

c_NOx

Kat. neu

Zusatz-Fläche
Kat. gealtert

A

A'

c_NOx_th

Zeit nach Motorstart

t1_n    t1_g

t_sl